# EUROPÄISCHE PATENTSCHRIFT

(11) **EP 1 409 277 B1**
(45) Veröffentlichungstag und Bekanntmachung des Hinweises auf die Patenterteilung: **03.11.2004**
(21) Anmeldenummer: 02762229.9
(22) Anmeldetag: 24.07.2002
(51) Int. Cl.: B60C 27/14

(54) **GLEITSCHUTZVORRICHTUNG FÜR FAHRZEUGRÄDER**
NONSKID DEVICE FOR THE WHEELS OF VEHICLES
DISPOSITIF ANTIPATINAGE DESTINE A DES ROUES DE VEHICULES

(30) Priorität: 26.07.2001 DE 10137512
(43) Veröffentlichungstag der Anmeldung: 21.04.2004
(73) Patentinhaber: RUD-Kettenfabrik Rieger & Dietz GmbH U. Co., 73432 Aalen-Unterkochen (DE)
(72) Erfinder: KAISER, Helmut, 73432 Aalen (DE); DEGER, Werner, 73467 Kirchheim a. R. (DE)
(74) Vertreter: Böning, Manfred, Prof.Dr.-Ing.
(86) Internationale Anmeldenummer: PCT/DE2002/002788
(87) Internationale Veröffentlichungsnummer: WO 2003/011618

(56) Entgegenhaltungen:
- EP-A- 0 352 874
- DE-A- 4 127 448
- DE-C- 4 018 415
- DE-U- 8 816 243
- US-A- 4 922 982

## Beschreibung

### Technisches Gebiet

Die Erfindung betrifft eine Gleitschutzvorrichtung für Fahrzeugräder mit einer im montierten Zustand im Bereich der Radachse zu liegen kommenden und gegenüber dem Rad drehbaren Halterung für mindestens drei sich radial nach außen erstreckende Haltearme zum Halten von über den Radumfang verteilten Gleitschutzmitteln sowie mit einem zur Einleitung von Spannkräften in die Haltearme dienenden, die Halterung mit dem Rad verbindenden Spannstrang, der vom Zentrum der Halterung über eine erste Umlenkung zu einer im Randbereich der Halterung gelegenen zweiten Umlenkung verläuft.

### Stand der Technik

Eine Gleitschutzvorrichtung der vorstehenden Art ist aus der DE 4018415 C1 bekannt Bei der bekannten Gleitschutzvorrichtung wird der Spannstrang von einer an ihrem einen Ende mit einem flachen Bandabschnitt versehenen Kette oder einem Seil gebildet und entweder mittels einer Sperrklinke im Zentrum der Halterung, durch Rastorgane im Bereich der zweiten Umlenkung oder durch eine unter Verwendung einer Klemmmutter festklemmbare, eine Art zweite Umlenkung bildende Seilrolle in seiner Spannposition arretiert. Bekannt ist es außerdem - und zwar aus der DE 41 27 448 A1 - als Spannstrang einen Gummistropp zu verwenden. Sämtliche vorgenannten Lösungen vermögen weder hinsichtlich des Bedienungskomforts noch bezüglich ihrer Funktion voll zu befriedigen, wobei es sich insbesondere als nachteilig erweist, dass die Spannungen, die in den Haltearmen wirksam werden, in Abhängigkeit vom Kraftpotential des Benutzers der Gleitschutzvorrichtung in unerwünscht weiten Grenzen variieren.

### Darstellung der Erfindung

Der Erfindung liegt die Aufgabe zugrunde, eine Gleitschutzvorrichtung der in Betracht gezogenen Art zu schaffen, die sich bequem montieren lässt und die die Aufbringung im Wesentlichen konstanter Spannkräfte ermöglicht.

Die vorstehende Aufgabe wird erfindungsgemäß dadurch gelöst, dass bei einer gattungsgemäßen Gleitschutzvorrichtung der Spannstrang von der zweiten Umlenkung zu mindestens einem Arretierungsorgan an einem Spannhebel geführt ist, der im Abstand von der zweiten Umlenkung schwenkbar an der Halterung gelagert ist und durch dessen Schwenkbewegung eine Zugspannung in den Spannstrang einleitbar ist.

Die erfindungsgemäße Vorrichtung bietet den Vorteil, dass sie nach Voreinstellung der Spannstranglänge auf die jeweilige Rad/Reifenkombination ohne die Notwendigkeit der Aufbringung von Spannkräften zunächst bequem am Rad befestigt werden kann und dass erst nach der Befestigung der Vorrichtung durch die Einleitung einer Schwenkbewegung in den Spannhebel eine von dessen Abmessungen und Lage abhängige, weitgehend gleich große Spannkraft erzeugt wird. Die Voreinstellung braucht dabei in Abhängigkeit vom Fahrzeugtyp und der Bereifung zumindest für eine Wintersaison lediglich einmal durchgeführt werden.

Weitere Merkmale und Einzelheiten der Erfindung ergeben sich aus den Unteransprüchen und der nachstehenden Beschreibung einer in den beigefügten Zeichnungen dargestellten Ausführungsform der Erfindung.

Kurze Beschreibung der Zeichnungen

Es zeigen:
- Fig. 1: die perspektivische Ansicht einer in einem ersten Montageschritt auf den Fahrzeugreifen gestülpten Gleitschutzvorrichtung;
- Fig. 2: im vergrößertem Maßstab eine Einzelheit der Fig. 1 während des Aufbringens einer Spannkraft;
- Fig. 3: die Gleitschutzvorrichtung gemäß Fig. 1 in ihrer nach dem Anfahren des Fahrzeuges automatisch erreichten Endposition;
- Fig. 4: in vergrößertem Maßstab die Draufsicht auf die Halterung der Gleitschutzvorrichtung in der Endposition gemäß Fig. 3;
- Fig. 5: teilweise im Schnitt die erfindungswesentlichen Teile der Gleitschutzvorrichtung in der in Fig. 1 dargestellten ersten Position des Montagevorganges;
- Fig. 5A: eine Einzelheit der Fig. 5 im vergrößerten Maßstab;
- Fig. 6: die in Fig. 5 dargestellten Teile in einer zweiten Position des Montagevorganges;
- Fig. 7: die in Fig.5 dargestellten Teile in einer dritten Position des Montagevorganges;
- Fig. 7A: eine Einzelheit der Fig. 7;
- Fig. 8: die in Fig. 3 dargestellten Teile nach Abschluss des Montagevorganges;
- Fig. 8A: eine Einzelheit der Fig. 8 und
- Fig. 9: eine der Fig. 6 entsprechende Darstellung mit einem modifizierten Arretierungsorgan.

### Wege zur Ausführung der Erfindung

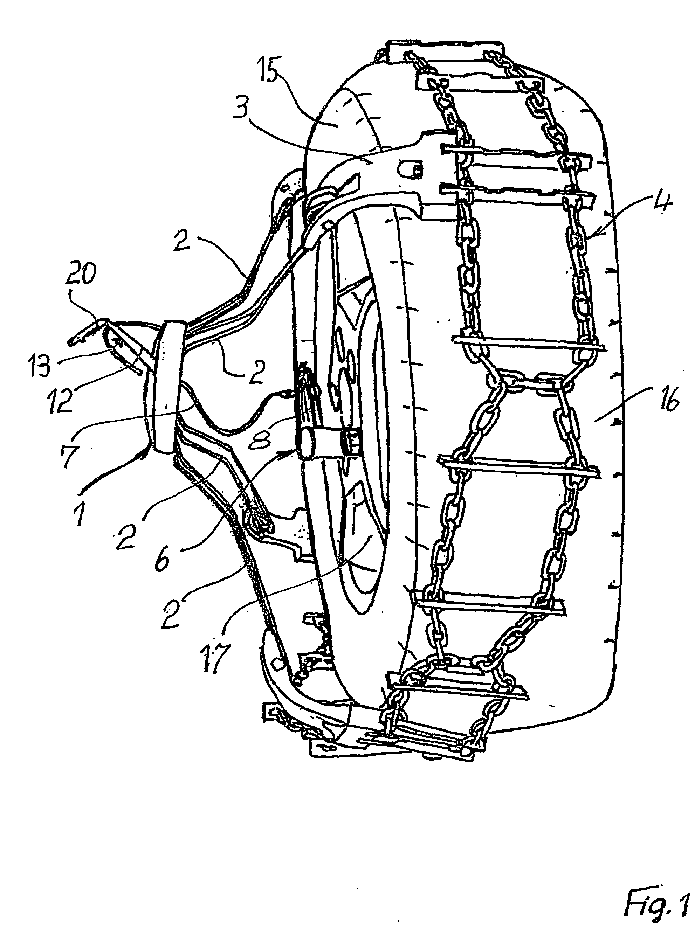

Figur 1 zeigt eine Gleitschutzvorrichtung mit einer Halterung 1 für vier federnd ausgebildete, sich von der Halterung 1 radial nach außen erstreckende, von Drahtbügeln gebildete Haltearme 2, die an ihren Enden mit Auslegern 3 verbunden sind, an denen in aus der DE 1974894262 bekannter Art und Weise ein Laufnetz 4 befestigt ist. Die Verbindung ist dabei so ausgestaltet, dass zwischen den Haltearmen 2 und den Auslegern 3 begrenzte Relativbewegungen in radialer Richtung möglich sind. Zur Befestigung der Gleitschutzvorrichtung an einer Radschraube 5 dienen ein Anschlussteil 6 der aus der Bezugsdruckschrift bekannten Art und ein Spannstrang 7, der von einem flexiblen, in Längsrichtung aber praktisch unelastischen Gurt gebildet wird. Die Verwendung eines in Längsrichtung unelastischen Spannstranges 7 bietet gegenüber ebenfalls bekannten Lösungen mit elastischen Spannsträngen den Vorteil, dass die Kräfte, mit denen das Laufnetz 4 während des Einsatzes der Gleitschutzvorrichtung auf der Lauffläche des Reifens gehalten wird, einzig und allein vom Grad der elastischen Verformung der Haltearme 2 abhängen. Probleme, wie sie sich bei Verwendung eines gummielastischen Spannstranges aufgrund von Alterungserscheinungen gezeigt haben, werden so vermieden.

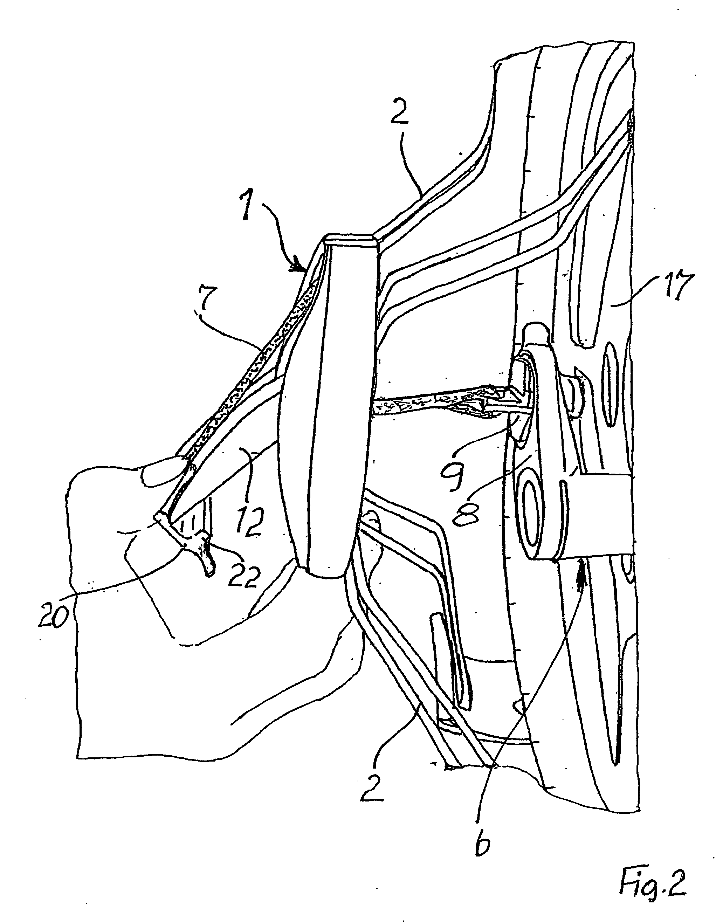

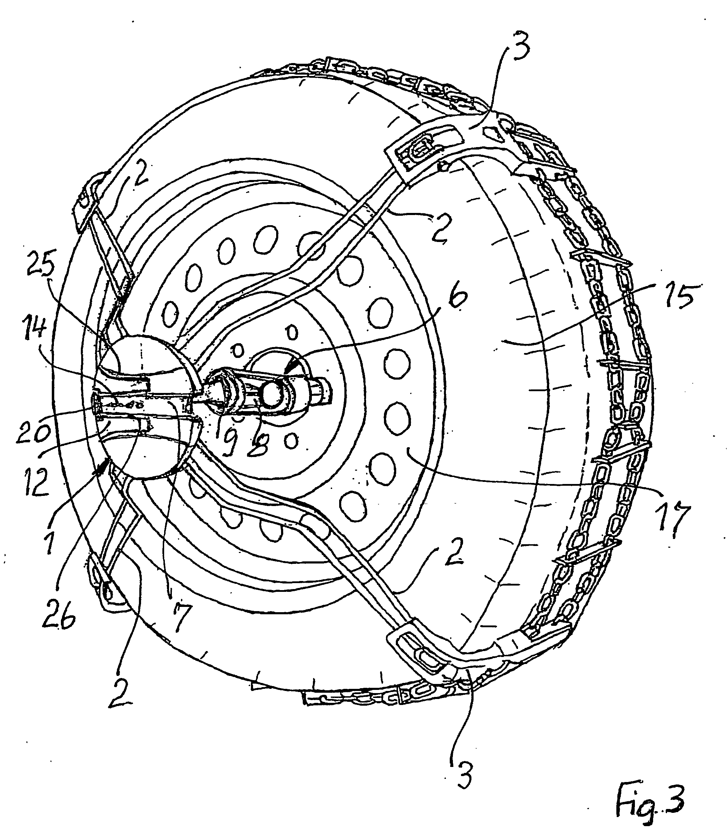

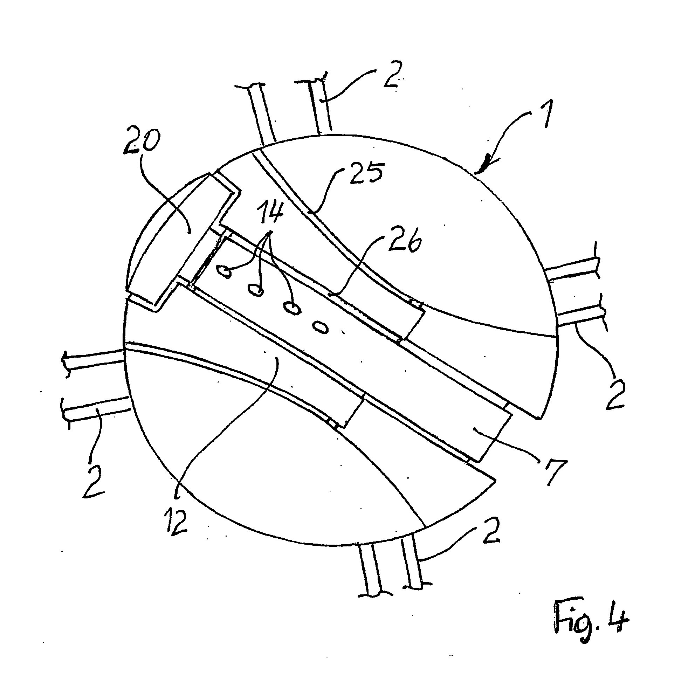

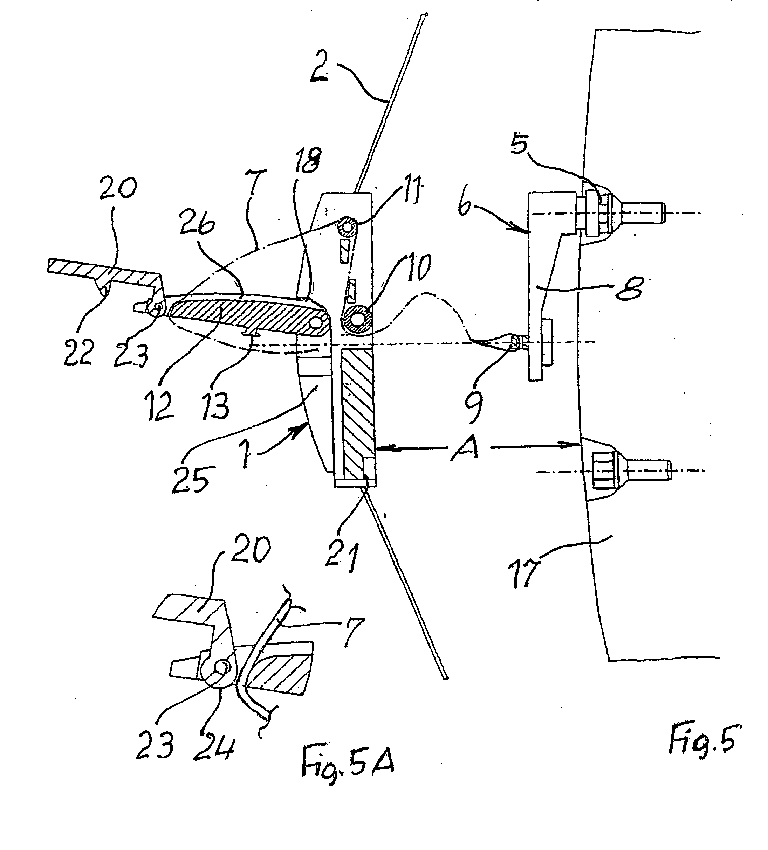

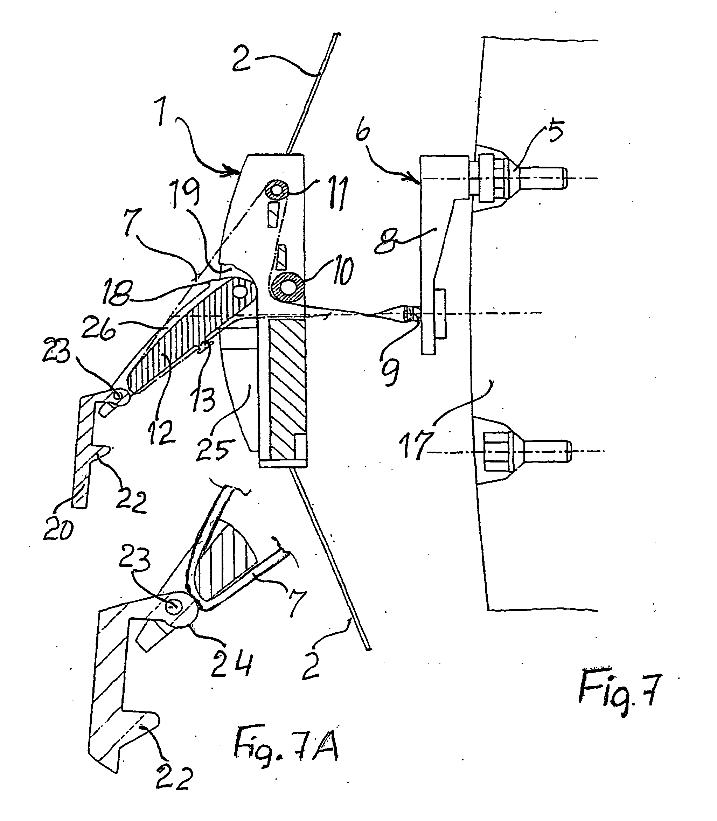

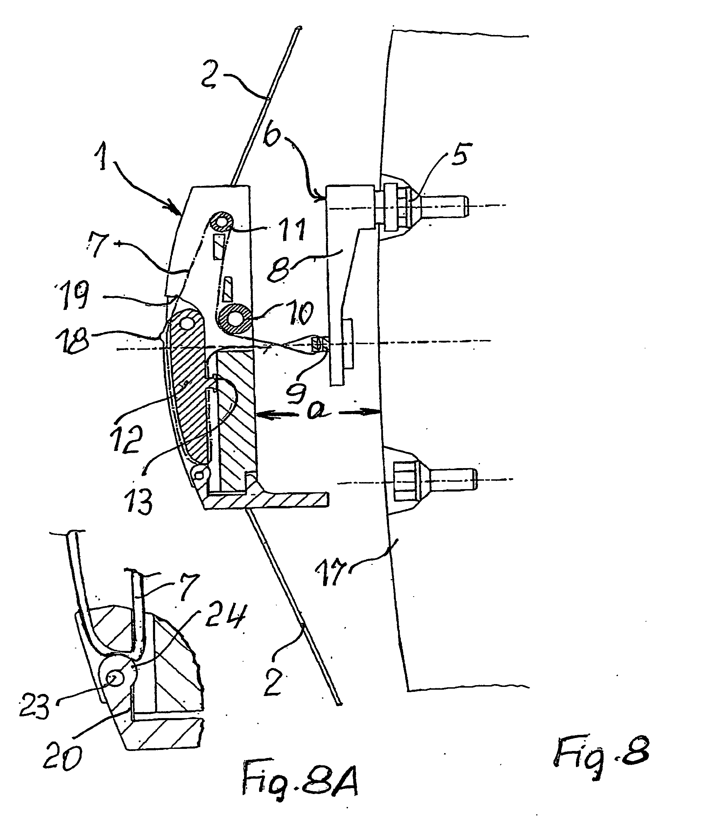

Der Spannstrang 7 erstreckt sich, wie aus Figur 2 ersichtlich, von einem am freien Ende eines Auslegerarmes 8 des Anschlussteiles 6 drehbar gelagerten Wirbel 9 zum Zentrum der Halterung 1. Er passiert zunächst eine erste, von einer Rolle gebildete Umlenkung 10, von der er zu einer zweiten, ebenfalls von einer Rolle gebildeten Umlenkung 11 im Randbereich der Halterung 1 gelangt. Von der zweiten Umlenkung 11 ist der Spannstrang 7 in den Bereich des freien Endes eines Spannhebels 12 geführt, wo er erneut umgelenkt wird. An der Innenseite des Spannhebels 12 ist ein von einem pilzkopfartigen Vorsprung gebildetes Befestigungs- bzw. Arretierungsorgan 13 angeordnet, das in jeweils ein Loch einer in Figur 3 und 4 erkennbaren Lochreihe 14 passt, die in einem Abschnitt des von dem Gurt gebildeten Spannstranges 7 vorgesehen ist, um eine den jeweiligen Gegebenheiten entsprechende Voreinstellung der Länge des Spannstranges 7 zu ermöglichen. Der Spannstrang 7 wird, wie in den Figuren 1, 5 und 6 dargestellt ist, praktisch zugspannungsfrei am hochgeklappten Spannhebel 12 arretiert. Die Haltear, me 2 liegen dabei ebenfalls praktisch unverformt an der Flanke 15 des Reifens 16 an. Der in Figur 5 eingezeichnete Abstand A zwischen der Halterung und der Felge 17 des Rades hat dabei einen Wert, der von der Ausgangsform der Haltearme 2 abhängt. Zum Aufbringen der für die einwandfreie automatische Restmontage erforderlichen Kräfte beim Anfahren des mit der Gleitschutzvorrichtung ausgestatteten Fahrzeuges wird der Spannhebel 12 aus der in den Figuren 1 und 5 dargestellten Ausgangslage in die Endlage gemäß den Figuren 3 und 8 überführt. Die Figuren 2 und 7 zeigen eine Zwischenposition. In der Endlage hat die Halterung 1 einen Abstand a von der Felge 17 (vgl. Fig. 8), der kleiner ist als der Abstand A. Aufgrund der Differenz zwischen den Abständen A und a werden die Haltearme 2 im Betriebszustand der Gleitschutzvorrichtung mit einer Kraft gegen die Flanke 15 des Reifens 16 gedrückt, die einerseits hinreichend groß ist, um die automatische Restmontage zu bewirken und die andererseits einen einwandfreien Sitz des Laufnetzes 4 auf der Lauffläche des Reifens 16 gewährleistet. Die bei bekannten Gleitschutzvorrichtungen bestehende Gefahr, dass die Kräfte, mit denen die Haltearme 2 gegen die Reifenflanken 15 gedrückt werden, Werte annehmen, die das die Selbstreinigung des Laufnetzes 4 begünstigende Wandern des Laufnetzes auf dem Reifen beeinträchtigen, ist so eliminiert.

Während zur Sicherung des Spannhebels 12 in seiner in den Figuren 1, 5 und 6 dargestellten Ausgangslage eine Rastnase 18 und eine Rastmulde 19 dienen, erfolgt die Spannhebelsicherung in der Endlage des Spannhebels 12 mit Hilfe eines von einer Schwenklasche gebildeten Sicherungselementes 20, das mit einem einer Anschlagkante 21 der Halterung hintergreifenden Vorsprung 22 versehen ist. Wie aus den Figuren 5A, 7A und 8A erkennbar, bildet das Sicherungselement 20 im Bereich seiner Schwenkachse 23 einen Klemmnocken 24, durch den der Spannstrang 7 zusätzlich gegen ein Verrutschen gesichert ist.

Zur Vermeidung von über die Halterung 1 vorstehenden Teilen ist die Halterung 1 mit einer den Spannhebel 12 in der Betriebsstellung der Gleitschutzvorrichtung aufnehmenden Aussparung 25 versehen, während der Spannhebel 12 an seiner Außenseite eine Führungsnut 26 für den Spannstrang 7 aufweist.

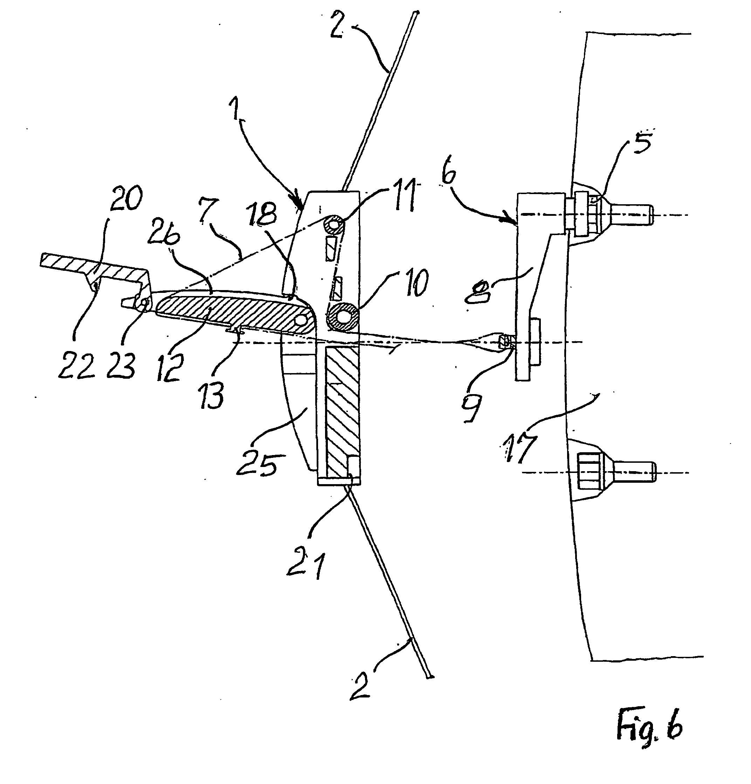

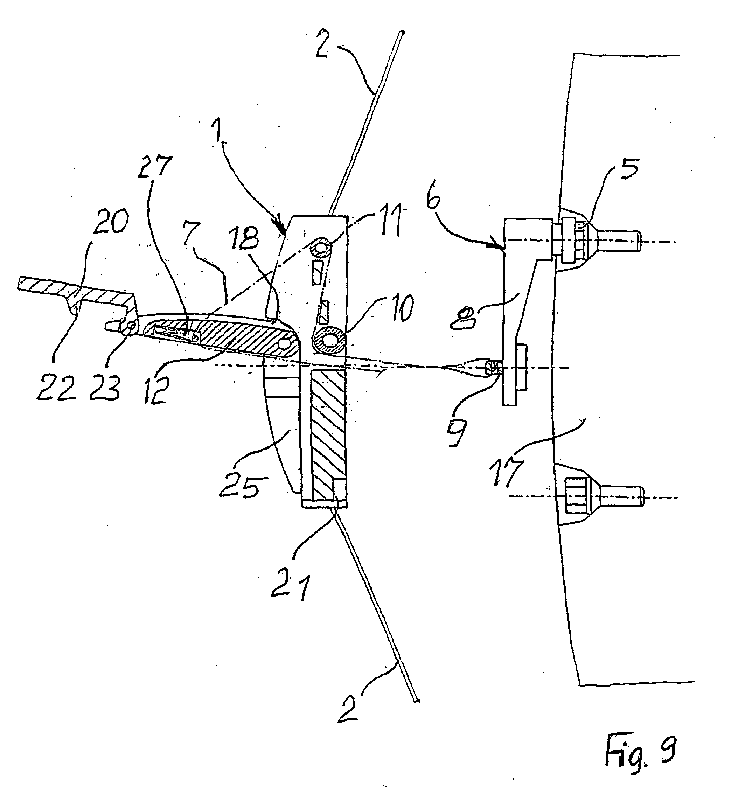

Während zur Arretierung des Spannstranges 7 in seiner Ausgangslage in den Fällen der Figuren 6, 7 und 8 der in Löcher der Lochreihe 14 eindrückbare pilzkopfartige Vorsprung 13 dient, erfolgt die Befestigung bzw. Arretierung des Spannstranges 7 im Falle der Fig. 9 durch eine an sich bekannte Stahlklemmschnelle 27.

## Patentansprüche

1. Gleitschutzvorrichtung für Fahrzeugräder mit einer im montierten Zustand im Bereich der Radachse zu liegen kommenden und gegenüber dem Rad drehbaren Halterung (1) für mindestens drei sich radial nach außen erstreckende Haltearme (2) zum Halten von über den Radumfang verteilten Gleitschutzmitteln (4) sowie mit einem zur Einleitung von Spannkräften in die Haltearme (2) dienenden, die Halterung (1) mit dem Rad verbindenden Spannstrang, der vom Zentrum der Halterung über eine erste Umlenkung (10) zu einer im Randbereich der Halterung gelegenen zweiten Umlenkung (11) verläuft, **dadurch gekennzeichnet, dass** der Spannstrang (7) von der zweiten Umlenkung (11) zu mindestens einem Arretierungsorgan (13) an einem Spannhebel (12) geführt ist, der im Abstand von der zweiten Umlenkung (11) schwenkbar an der Halterung (1) gelagert ist und durch dessen Schwenkbewegung eine Zugspannung in den Spannstrang (7) einleitbar ist.

2. Vorrichtung nach Anspruch 1, **dadurch gekennzeichnet, dass** die Umlenkungen (10,11) von Rollen gebildet werden.

3. Vorrichtung nach Anspruch 1 oder 2, **dadurch gekennzeichnet, dass** der Spannhebel (12) mit einem ihn in seiner Spannstellung arretierenden Sicherungselement (20) versehen ist.

4. Vorrichtung nach Anspruch 3, **dadurch gekennzeichnet, dass** das Sicherungselement (20) von einer am freien Ende des Spannhebels (12) angeordneten Schwenklasche gebildet wird, die mit einem eine Anschlagkante (21) der Halterung (1) in der Spannstellung hintergreifenden Vorsprung (22) versehen ist.

5. Vorrichtung nach Anspruch 3 oder 4, **dadurch gekennzeichnet, dass** das Sicherungselement (20) mit einem Klemmnocken (24) zur Arretierung des Spannstranges (7) in der Spannstellung ausgestattet ist.

6. Vorrichtung nach Anspruch 4 oder 5, **dadurch gekennzeichnet, dass** die Anschlagkante (21) von einer dem Fahrzeugrad zugewandten Kante des Außenrandes der Halterung (1) gebildet wird.

7. Vorrichtung nach einem der Ansprüche 1 bis 6, **dadurch gekennzeichnet, dass** der Schwenkweg des Spannhebels (12) durch Anschläge begrenzt ist.

8. Vorrichtung nach einem der Ansprüche 1 bis 7, **dadurch gekennzeichnet, dass** die Halterung (1) an ihrer Außenseite mit einer den Spannhebel (12) in der Spannstellung aufnehmenden Aussparung (25) versehen ist.

9. Vorrichtung nach einem der Ansprüche 1 bis 8, **dadurch gekennzeichnet, dass** das Arretierungsorgan (13) an der in der Spannstellung der Halterung (1) zugewandten Innenseite des Spannhebels (12) angeordnet ist.

10. Vorrichtung nach Anspruch 9, **dadurch gekennzeichnet, dass** der Spannstrang (7) über die Außenseite des Spannhebels (12) zum Arretierungsorgan (13) an der Innenseite des Spannhebels (12) geführt ist.

11. Vorrichtung nach einem der Ansprüche 1 bis 10, **dadurch gekennzeichnet, dass** der Spannstrang (7) flexibel, in Längsrichtung aber praktisch unelastisch ist.

12. Vorrichtung nach Anspruch 11, **dadurch gekennzeichnet, dass** der Spannstrang (7) von einem Gurt gebildet wird.

13. Vorrichtung nach einem der Ansprüche 1 bis 12, **dadurch gekennzeichnet, dass** der Spannhebel (12) mit einer Führungsnut für einen in der Spannstellung an seiner Außenseite zu liegen kommenden Abschnitt des Spannstranges (7) versehen ist.

14. Vorrichtung nach einem der Ansprüche 1 bis 13, **dadurch gekennzeichnet, dass** das Arretierungsorgan (13) von einem pilzkopfartigen Vorsprung des Spannhebels (12) gebildet wird.

15. Vorrichtung nach Anspruch 14, **dadurch gekennzeichnet, dass** der Spannstrang (7) mit einer eine Voreinstellung der Länge des die Halterung (1) mit dem Fahrzeugrad verbindenden Abschnitts des Spannstrangs (7) ermöglichenden Reihe (14) von Löchern zur Aufnahme des Arretierungsorgan (13) versehen ist.

16. Vorrichtung nach einem der Ansprüche 1 bis 13, **dadurch gekennzeichnet, dass** das Arretierungsorgan von einer Stahlklemmschnalle (27) gebildet wird.

17. Vorrichtung nach einem der Ansprüche 1 bis 16, **dadurch gekennzeichnet, dass** die Außenfläche des in seine Spannstellung überführten Spannhebels (12) mit der Außenfläche der Halterung (1) fluchtet.

18. Vorrichtung nach einem der Ansprüche 1 bis 17, **dadurch gekennzeichnet, dass** der Spannstrang (7) mit dem Fahrzeugrad über ein Anschlussteil (6) verbunden ist, das mit Mitteln zu seiner lösbaren Befestigung an einer Radschraube (5) oder Radmutter versehen ist und einen im Bereich der Radachse endenden Auslegerarm (8) aufweist, an dessen freiem Ende der Spannstrang (7) angreift.

19. Vorrichtung nach Anspruch 18, **dadurch gekennzeichnet, dass** der Spannstrang (7) mit einer Anschlussöse eines am freien Ende des Auslegerarmes (8) angeordneten Wirbels (9) verbunden ist.

20. Verfahren zum Montieren einer Gleitschutzvorrichtung nach einem der Ansprüche 1 bis 19, **dadurch gekennzeichnet, dass** der Spannstrang (7) in gestrecktem Zustand praktisch zugspannungsfrei am hochgeklappten Spannhebel (12) arretiert und anschließend durch Umlegen des Spannhebels (12) in seine Spannstellung unter elastischer Deformation der Haltearme (2) mit einer die Halterung (1) gegen das Fahrzeugrad ziehenden Zugkraft beaufschlagt wird.

## Claims

1. A nonskid device for vehicle wheels, with a holder, coming to rest in the region of the wheel axis in the mounted state and rotatable with respect to the wheel, for at least three holding arms, extending radially outward, for holding nonskid means distributed over the wheel circumference, and with a tension cord which serves for the introduction of tension forces into the holding arms and connects the holder to the wheel and which runs from the center of the holder via a first deflection to a second deflection located in the edge region of the holder, **characterized in that** the tension cord (7) is led from the second deflection (11) to at least one detaining member (13) at a tension lever (12) which is mounted pivotably on the holder (1) at a distance from the second deflection (11) and by means of the pivoting movement of which a pull can be introduced into the tension cord (7).

2. The device as claimed in claim 1, **characterized in that** the deflections (10, 11) are formed by pulleys.

3. The device as claimed in claim 1 or 2, **characterized in that** the tension lever (12) is provided with a securing element (20) detaining it in its tension position.

4. The device as claimed in claim 3, **characterized in that** the securing element (20) is formed by a pivoting tab which is arranged at the free end of the tension lever (12) and which is provided with a projection (22) engaging behind a stop edge (21) of the holder (1) in the tension position.

5. The device as claimed in claim 3 or 4, **characterized in that** the securing element (20) is equipped with a clamping boss (24) for detaining the tension cord (7) in the tension position.

6. The device as claimed in claim 4 or 5, **characterized in that** the stop edge (21) is formed by a cant, facing the vehicle wheel, of the outer edge of the holder (1).

7. The device as claimed in one of claims 1 to 6, **characterized in that** the pivoting travel of the tension lever (12) is limited by stops.

8. The device as claimed in one of claims 1 to 7, **characterized in that** the holder (1) is provided on its outside with a clearance (25) which receives the tension lever (12) in the tension position.

9. The device as claimed in one of claims 1 to 8, **characterized in that** the detaining member (13) is arranged on the inside, facing the holder (1) in the tension position, of the tension lever (12).

10. The device as claimed in claim 9, **characterized in that** the tension cord (7) is led via the outside of the tension lever (12) to the detaining member (13) on the inside of the tension lever (12).

11. The device as claimed in one of claims 1 to 10, **characterized in that** the tension cord (7) is flexible, but is virtually inelastic in the longitudinal direction.

12. The device as claimed in claim 11, **characterized in that** the tension cord (7) is formed by a belt.

13. The device as claimed in one of claims 1 to 12, **characterized in that** the tension lever (12) is provided with a guide groove for a portion of the tension cord (7), said portion coming to rest on the outside of said tension lever in the tension position.

14. The device as claimed in one of claims 1 to 13, **characterized in that** the detaining member (13) is formed by a mushroom-like projection of the tension lever (12).

15. The device as claimed in claim 14, **characterized in that** the tension cord (7) is provided with a row (14) of holes for receiving the detaining member (13), said row allowing a presetting of the length of that portion of the tension cord (7) which connects the holder (1) to the vehicle wheel.

16. The device as claimed in one of claims 1 to 13, **characterized in that** the detaining member is formed by a steel clamping clip (27).

17. The device as claimed in one of claims 1 to 16, **characterized in that** the outer surface of the tension lever (12) transferred into its tension position is in alignment with the outer surface of the holder (1).

18. The device as claimed in one of claims 1 to 17, **characterized in that** the tension cord (7) is connected to the vehicle wheel via a connection part (6) which is provided with means for its releasable fastening to a wheel bolt (5) or wheel nut and which has an extension arm (8) which ends in the region of the wheel axis and on the free end of which the tension cord (7) engages.

19. The device as claimed in claim 18, **characterized in that** the tension cord (7) is connected to a connection lug of a spinner (9) arranged at the free end of the extension arm (8).

20. A method for mounting a nonskid device as claimed in one of claims 1 to 19, **characterized in that** the tension cord (7), in the stretched state, is detained, virtually free of pull, on the swung-up tension lever (12) and subsequently, by the tension lever (12) being folded into its tension position, is acted upon, along with the elastic deformation of the holding arms (2) by a pull which pulls the holder (1) against the vehicle wheel.

## Revendications

1. Dispositif antidérapant pour roues de véhicules, comprenant une attache (1), venant se placer à l'état monté dans la zone de l'axe de la roue et pouvant tourner en regard de la roue, pour au moins trois bras de retenue (2) s'étendant radialement vers l'extérieur pour maintenir des moyens antidérapants (4) répartis sur la circonférence de la roue, ainsi qu'une corde de serrage reliant l'attache (1) à la roue et servant à l'introduction de forces de serrage dans les bras de support (2), ladite corde de serrage s'étendant du centre de l'attache, via un premier renvoi (10), à un second renvoi situé dans la zone limitrophe de l'attache, **caractérisé en ce que** la corde de serrage (7) est guidée par le second renvoi (11) vers au moins un organe d'arrêt (13) sur un levier de serrage (12), qui est monté, à distance du second renvoi (11), à pivotement sur l'attache (1) et par le pivotement duquel un effort de traction peut être introduit dans la corde de serrage(7).

2. Dispositif selon la revendication 1, **caractérisé en ce que** les renvois (10, 11) sont formés de rouleaux.

3. Dispositif selon la revendication 1 ou 2, **caractérisé en ce que** le levier de serrage (12) est équipé d'un élément de sécurité (20) le bloquant dans sa position de serrage.

4. Dispositif selon la revendication 3, **caractérisé en ce que** l'élément de sécurité (20) est formé d'une éclisse pivotante aménagée sur l'extrémité libre du levier de serrage (12) et qui est équipée d'une saillie (22) s'accrochant à l'arrière sur une arête de butée (21) de l'attache (1) en position de serrage.

5. Dispositif selon la revendication 3 ou 4, **caractérisé en ce que** l'élément de sécurité (20) présente un ergot de serrage (24) pour bloquer la corde de serrage (7) en position de serrage.

6. Dispositif selon la revendication 4 ou 5, **caractérisé en ce que** l'arête de butée (21) est formée d'une arête, tournée vers la roue du véhicule, du bord extérieur de l'attache (1).

7. Dispositif selon l'une quelconque des revendications 1 à 6, **caractérisé en ce que** le trajet de pivotement du levier de serrage (12) est limité par des butées.

8. Dispositif selon l'une quelconque des revendications 1 à 7, **caractérisé en ce que** l'attache (1) est équipée, sur son côté extérieur, d'une cavité (25) recevant le levier de serrage (12) en position de serrage.

9. Dispositif selon l'une quelconque des revendications 1 à 8, **caractérisé en ce que** l'organe d'arrêt (13) est aménagé sur la face interne du levier de serrage (12) tournée vers la position de serrage de l'attache (1).

10. Dispositif selon la revendication 9, **caractérisé en ce que** la corde de serrage (7) est guidée sur la face externe du levier de serrage (12) vers l'organe d'arrêt (13) sur la face interne du levier de serrage (12).

11. Dispositif selon l'une quelconque des revendications 1 à 10, **caractérisé en ce que** la corde de serrage (7) est flexible, mais n'est pratiquement pas élastique dans le sens de la longueur.

12. Dispositif selon la revendication 11, **caractérisé en ce que** la corde de serrage (7) est formée d'une courroie.

13. Dispositif selon l'une quelconque des revendications 1 à 12, **caractérisé en ce que** le Levier de serrage (12) est équipé d'une rainure de guidage pour une section de la corde de serrage (7) venant se placer en position de serrage sur sa face extérieure.

14. Dispositif selon l'une quelconque des revendications 1 à 13, **caractérisé en ce que** l'organe d'arrêt (13) est formé d'une saillie en forme de tête de champignon du levier de serrage (12).

15. Dispositif selon la revendication 14, **caractérisé en ce que** la corde de serrage (7) est équipée d'une rangée de trous (14) permettant un réglage préalable de la longueur de la section de la corde de serrage (7) reliant l'attache (1) à la roue du véhicule pour recevoir l'organe d'arrêt (13).

16. Dispositif selon l'une quelconque des revendications 1 à 13, **caractérisé en ce que** l'organe d'arrêt est formé d'une boucle de serrage en acier (27).

17. Dispositif selon l'une quelconque des revendications 1 à 16, **caractérisé en ce que** la surface externe du levier de serrage (12) transféré dans sa position de serrage s'aligne avec la surface extérieure de l'attache (1).

18. Dispositif selon l'une quelconque des revendications 1 à 17, **caractérisé en ce que** la corde de serrage (7) est reliée à la roue du véhicule via une pièce de raccordement (6), qui est équipée de moyens pour sa fixation amovible sur un boulon de roue (5) ou un écrou de roue et présente un avant-bras (8) se terminant dans la zone de l'axe de la roue, bras sur l'extrémité libre duquel la corde de serrage (7) agit.

19. Dispositif selon la revendication 18, **caractérisé en ce que** la corde de serrage (7) est reliée à un oeillet de raccordement d'un émerillon (9) aménagé sur l'extrémité libre de l'avant-bras (8).

20. Procédé de montage d'un dispositif antidérapant selon l'une quelconque des revendications 1 à 19, **caractérisé en ce que** la corde de serrage (7) est bloquée à l'état étiré pratiquement sans tension de traction sur le levier de serrage relevé (12) et est ensuite sollicitée par rabattement du levier de serrage (12) dans sa position de serrage sous déformation élastique des bras de support (2) avec une force de traction tirant l'attache (1) contre la roue du véhicule.
